# EUROPEAN PATENT SPECIFICATION

(11) **EP 2 627 976 B1**
(45) Date of publication and mention of the grant of the patent: **22.07.2020**
(21) Application number: 11832827.7
(22) Date of filing: 10.10.2011
(51) Int. Cl.: G01F 1/66, G01F 1/20

(54) **A METHOD AND AN APPARATUS FOR INDICATING A CRITICAL LEVEL OF A LIQUID FLOW**
VERFAHREN UND VORRICHTUNG ZUR ANZEIGE EINES KRITISCHEN PEGELS EINER FLÜSSIGKEITSSTRÖMUNG
PROCÉDÉ ET APPAREIL POUR INDIQUER UN NIVEAU CRITIQUE D'UN ÉCOULEMENT DE LIQUIDE

(30) Priority: 12.10.2010 SE 1001006
(43) Date of publication of application: 21.08.2013
(73) Proprietor: Brännström Gruppen AB, 416 70 Göteborg (SE)
(72) Inventor: BRÄNNSTRÖM, Roland, 41670 Göteborg (SE)
(74) Representative: Bergenstråhle Group AB
(86) International application number: PCT/SE2011/000177
(87) International publication number: WO 2012/050499

(56) References cited:
- WO-A1-00/51495
- US-A- 3 116 639
- US-A- 3 641 994
- US-A- 4 074 571
- US-A- 4 615 222
- US-A- 4 841 938
- US-A- 5 987 997
- US-A1- 2008 139 951
- US-B1- 6 480 793
- US-B1- 6 644 128
- FRANZ DURST ET AL: "Forced laminar-to-turbulent transition of pipe flows", JOURNAL OF FLUID MECHANICS, vol. 560, 20 July 2006 (2006-07-20), page 449, XP055125931, ISSN: 0022-1120, DOI: 10.1017/S0022112006000528

## Description

### TECHNICAL FIELD

The present invention relates to a method of indicating a liquid flow, as well as an apparatus for carrying the method into effect. The apparatus comprises a conduit length through which the liquid flow passes, and a sensor.

### BACKGROUND ART

In many industrial contexts, and onboard vessels, there is a need to monitor the size of a liquid flow, so that it lies above a minimum critical level. The reverse situation may naturally also apply, i.e. the liquid flow may not exceed a certain critical level. If such a critical level occurs, an alert signal or other action is, for example, required.

A plurality of various solutions to the problem of monitoring a liquid flow so that it does not exceed or fall below a certain critical level are previously known in the art. Thus, it is known in the art to employ mechanical flow guards of different types, for example so-called paddle switches. Thermal flow guards are also previously known in the art.

In the measurement of liquid flows, i.e. a continuous monitoring of the size of the flow, there are various methods available, for example electromagnetic flow meters, corioli meters, differential pressure meters, turbine meters etc.

A feature common to these prior art techniques is that the switches or the meters are bulky and expensive. Further, certain types of switches or meters may, because of the presence of moving parts, be exposed to wear so that, as a result, their service life is insufficient.

### PROBLEM STRUCTURE

The present invention has for its object to design the method intimated by way of introduction such that it may be applied simply and economically with the aid of an extremely compact unit of equipment. Further, the present invention has for its object to design the method so that the limit value may readily be modified, that wear on the equipment employed is at a minimum and, as a result, its service life is extended.

The objects according to the present invention in respect of the apparatus are analogous to that disclosed above.

### SOLUTION

The objects forming the basis of the present invention will be attained regarding the method, if the method is characterised in that, on change of the liquid flow, the switch of the liquid flow between laminate and turbulent flow or the reverse is sensed and employed as an indication of the size of the liquid flow.

The objects forming the basis of the present invention will be attained regarding the apparatus, if the apparatus is characterised in that the sensor is a vibration sensor in order, on change of the liquid flow, to sense the occurrence or increase and cessation or decrease, respectively, of vibrations which take place on the switching of the liquid flow from laminate to turbulent flow, or vice versa.

The invention is defined by the scope of claims 1 and 4.

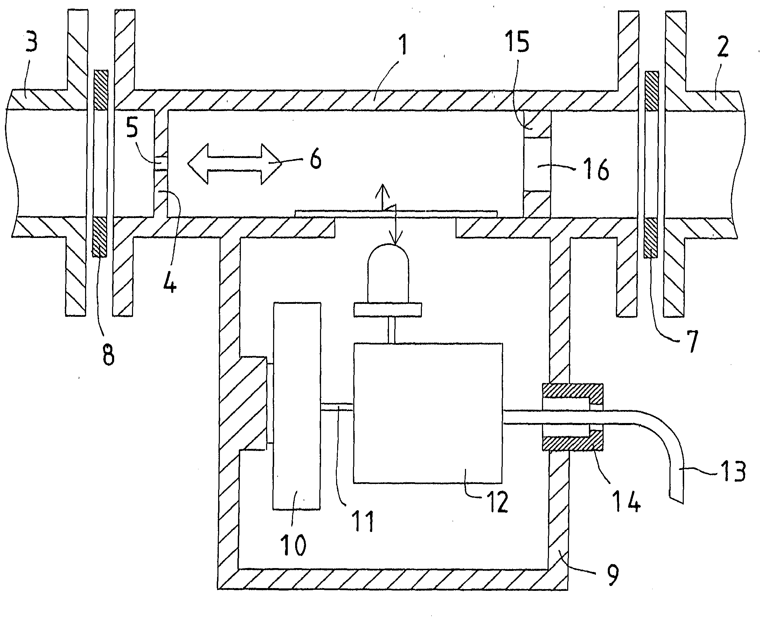

### BRIEF DESCRIPTION OF THE ACCOMPANYING DRAWING

The present invention will now be described in greater detail hereinbelow, with particular reference to the accompanying Drawing, which shows a schematic section through one embodiment of an apparatus for carrying the method into effect.

### DESCRIPTION OF PREFERRED EMBODIMENT

Indication of a liquid flow, hence the establishment of a certain critical liquid flow, which may either not be exceeded or shortfallen without an indication hereof being emitted is important in many technical contexts. One example of a practical situation where such a lower limit value may exist is an application with a liquid analyser, where certain qualities in the liquid are to be assessed. It is obvious that if the liquid flow is far too slight, the assessment of the relevant liquid quality cannot be carried out or will be incorrect. Conversely, the situation may apply that if the analysis takes up a certain time, the flow rate must not be too high, since the stay time of the liquid in the analyser will then be too short.

The present invention is based on the fundamental concept that flow in a section or length of conduit may either be laminate at low flow rates or speeds or turbulent at high flow speeds. A turbulent flow creates vibrations, i.e. pressure pulsations in the liquid, which are propagated to the material in the length of conduit through which the flow takes place. The switch from laminate to turbulent flow takes place within a narrow speed range, for which reason such a switch may be a good indicator that a certain linear flow speed has been achieved.

The linear flow speed in the liquid flow is substantially dependant, on the one hand, on the volume flow and on the other hand the through flow area available. For this reason, the flow is, according to the present invention, throttled in a throttle section where the linear flow speed increases. By varying the size of the throttle, it is possible to vary the speed increase and thereby also the relationship between the switching point from laminate to turbulent flow in relation to the volume flow. The above outlined reasoning applies however only if a series of other parameters is kept constant, such as surface structure, geometric configuration, radii of curvature etc.

The turbulence which is generated in the liquid flow when the flow has switched to turbulent flow, is sensed according to the invention by means of a vibration sensor which, in terms of vibration, must be affected directly by the flowing liquid or be connected to a length or section of conduit through which the flow takes place and to which the vibrations are transmitted. Consequently, no direct contact between the liquid flow and the sensor proper is required in the latter case.

In the accompanying Drawing, reference numeral 1 relates to a length of conduit through which a liquid flow takes place from an incoming connection 2 to an outgoing connection 3. In the length of conduit 1, there is, at the outlet end, a throttle 4 which preferably is easily replaceable to permit different sizes of the hole 5 through which the flow takes place.

In the figure, the throttle is disposed at the outlet end of the conduit length for reasons which are not related to the actual indication of the liquid flow. However, without departing from the inventive concept as herein disclosed, the flow may also take place in the opposite direction, as is illustrated by the double-headed arrow 6.

The conduit length 1 is produced from a material which displays a good capability to propagate vibrations, i.e. the material must not have any manifest damping capability. A suitable material may be a metal or a metal alloy. The throttle 4 is rigidly secured in the conduit length, so that the turbulence and vibrations which are created by the flow through the hole 5 are propagated to the conduit length 1.

In order that the apparatus according to the present invention and the indication of the liquid flow are not disturbed externally, there are disposed vibration-damping connections 7 and 8, respectively, between the incoming connection 2 and the outgoing connection 3. As a result, the apparatus according to the present invention is insulated from its ambient surroundings in terms of vibration.

An encapsulation 9 is rigidly connected to the length of conduit 1 and transmits vibrations to the length of conduit 1. The material in the encapsulation 9 is also selected in such a manner that there is a good vibration-conducting capability. Also here, a metal or a metal alloy may be an appropriate choice. The interior of the encapsulation 9 is suitably discrete from the interior of the length of conduit 1 so that the liquid flow flowing through the length of conduit cannot enter into the encapsulation.

Interiorly in the encapsulation 9 and rigidly connected thereto, there is disposed a vibration sensor 10 which senses the vibrations or the turbulence created on the flow of the liquid flow through the hole 5 and transmits further via the throttle 4, the length of conduit 1 and the encapsulation 9. In one preferred embodiment, the vibration sensor is based on a piezo-electric element, which has the ability, on mechanical action, to convert mechanical stresses to a varying electric voltage. Moreover, piezo-electric elements have the ability to work at high frequencies and also have a long service life.

Via a conduit 11, the vibration sensor 10 is connected to an interface 12 which, via a further conduit 13 and possibly a vibration-damping seal 14, is connected, for example, to a suitable registration instrument, an alarm device or a control system etc. Alternatively, the signal transfer from the interface 12 may take place in wireless mode.

In order to increase the amplitude of the vibrations generated by the turbulence at the hole 5, there may be provided in the conduit length 1 a screen wall 15 with an aperture 16. By, in such a manner, at least partly limiting a certain volume interiorly in the conduit length 1, there will be created a resonance chamber which amplifies the vibrations. Naturally, the aperture 16 must be of greater surface area than the hole 5.

In the foregoing, it was intimated that the surface area of the hole 5 determines the size of the volume flow which applies on switching from laminate to turbulent flow or vice versa. For this reason, the throttle 4 is easily replaceable by throttles with different sizes of hole 5. Another alternative is naturally to make the size of the hole 5 variable, so that continuous adjustment of the surface area of the hole may take place.

In one alternative embodiment, the conduit length 1 may per se be formed as a throttle and, in such an embodiment, has considerably smaller through flow area than the incoming and outgoing conduits 2 and 3, respectively. In this embodiment, the throttle 4 with the hole 5 and the screen wall 15 with the aperture 16 are dispensed with.

## Claims

1. A method of indicating a critical level of a liquid flow through a conduit length (1), which is provided with or designed as a throttle (4, 5) the size of which is varied **characterised in that,** on change of the liquid flow, such vibrations as occur or increase and cease or decrease, respectively, when the flow through the throttle is changed and switches from laminate to turbulent flow or the reverse, are sensed and employed as an indicator of the volume flow, and that a screen wall (15) with an aperture (16) which is larger than the throttle is disposed, in the conduit length (1) and a distance from the throttle (4, 5), whereby there is formed in the conduit length a resonance chamber for amplifying vibrations.

2. The method as claimed in Claim 1, **characterised in that** the throttle (4, 5) is positioned at the outlet end (3) of the conduit length (1).

3. The method as claimed in Claim 1 or 2, **characterised in that** the conduit length (1) in terms of vibration is kept insulated from the ambient surroundings, in particular the conduit or conduits (2, 3, respectively) to which the conduit length is connected.

4. An apparatus for indicating a liquid flow, comprising a conduit length (1), with a throttle (4, 5), which is exchangeable or has an adjustable size, and through which the liquid flow flows, **characterised in that** a sensor, which is a vibration sensor (10) is disposed, in order, on switching of the liquid flow, to sense the occurrence or increase and cessation or decrease, respectively, of vibrations which takes place on switching of the liquid flow from laminate to turbulent flow, or the reverse, and that there is disposed, in the conduit length (1) and at a distance from the throttle (4, 5), a screen wall (15) with an aperture (16) which is larger than the throttle, whereby there is formed in the conduit length a resonance chamber for amplifying vibrations.

5. The apparatus as claimed in Claim 4, **characterised in that** the conduit length (1) per se is designed as a throttle.

6. The apparatus as claimed in Claim 4 or 5, **characterised in that** the throttle (4, 5) is disposed at the outlet end of the conduit length (1).

7. The apparatus as claimed in any of Claims 4 to 6, **characterised in that** the conduit length (1) is insulated in terms of vibration from the ambient surroundings, principally from the conduit or conduits (2, 3) to which the conduit length is connected, **in that** there are disposed vibration-damping elements (7, 8) between the conduit length and the conduit or conduits.

8. The apparatus as claimed in any of Claims 4 to 7, **characterised in that** the sensor (10) comprises a piezo-electric element.

## Patentansprüche

1. Verfahren zum Anzeigen eines kritischen Pegels einer Flüssigkeitsströmung durch eine Leitungslänge (1), die mit einer Drossel (4, 5) versehen oder als solche konzipiert ist, deren Größe variiert ist, **dadurch gekennzeichnet, dass** bei Änderung der Flüssigkeitsströmung solche Schwingungen, die auftreten bzw. sich erhöhen und nachlassen bzw. sich verringern, wenn die Strömung durch die Drossel verändert wird und von einer laminaren zu einer Wirbelströmung oder umgekehrt umschaltet, abgetastet und als ein Anzeiger der Volumenströmung genutzt werden, und dass eine Abschirmwand (15) mit einer Öffnung (16), die größer als die Drossel ist, in der Leitungslänge (1) und einem Abstand von der Drossel (4, 5) angeordnet ist, wodurch in der Leitungslänge eine Resonanzkammer zum Verstärken von Schwingungen gebildet ist.

2. Verfahren nach Anspruch 1, **dadurch gekennzeichnet, dass** die Drossel (4, 5) an dem Auslassende (3) der Leitungslänge (1) positioniert ist.

3. Verfahren nach Anspruch 1 oder 2, **dadurch gekennzeichnet, dass** die Leitungslänge (1) in Bezug auf Schwingungen von der umliegenden Umgebung, insbesondere der Leitung oder den Leitungen (2 bzw. 3), mit der/denen die Leitungslänge verbunden ist, isoliert gehalten wird.

4. Einrichtung zum Anzeigen einer Flüssigkeitsströmung, umfassend eine Leitungslänge (1), mit einer Drossel (4, 5), die austauschbar ist oder eine einstellbare Größe aufweist, und durch die die Flüssigkeitsströmung strömt, **dadurch gekennzeichnet, dass** ein Sensor, der ein Schwingungssensor (10) ist, angeordnet ist, um bei Umschalten der Flüssigkeitsströmung das Vorhandensein bzw. Erhöhen und Nachlassen bzw. Verringern von Schwingungen, das bei Umschalten der Flüssigkeitsströmung von einer laminaren zu einer Wirbelströmung oder umgekehrt stattfindet, abzutasten, und dass in der Leitungslänge (1) und in einem Abstand von der Drossel (4, 5) eine Abschirmwand (15) mit einer Öffnung (16), die größer als die Drossel ist, angeordnet ist, wobei in der Leitungslänge eine Resonanzkammer zum Verstärken von Schwingungen gebildet ist.

5. Einrichtung nach Anspruch 4, **dadurch gekennzeichnet, dass** die Leitungslänge (1) per se als eine Drossel konzipiert ist.

6. Einrichtung nach Anspruch 4 oder 5, **dadurch gekennzeichnet, dass** die Drossel (4, 5) an dem Auslassende der Leitungslänge (1) angeordnet ist.

7. Einrichtung nach einem der Ansprüche 4 bis 6, **dadurch gekennzeichnet, dass** die Leitungslänge (1) in Bezug auf Schwingungen von der umliegenden Umgebung, hauptsächlich von der Leitung oder den Leitungen (2, 3), mit der/denen die Leitungslänge verbunden ist, isoliert ist, dass schwingungsdämpfende Elemente (7, 8) zwischen der Leitungslänge und der Leitung oder den Leitungen angeordnet sind.

8. Einrichtung nach einem der Ansprüche 4 bis 7, **dadurch gekennzeichnet, dass** der Sensor (10) ein piezoelektrisches Element umfasst.

## Revendications

1. Procédé pour indiquer un niveau critique d'un écoulement de liquide à travers une longueur de conduite (1), qui est munie ou conçue comme un étranglement (4, 5) dont la taille est modifiée, **caractérisé en ce que**, lors d'une modification de l'écoulement de liquide, les vibrations qui se produisent, respectivement, ou augmentent et cessent, ou diminuent lorsque l'écoulement à travers l'étranglement est modifié, et les passages d'un écoulement laminé à un écoulement turbulent ou l'inverse, sont détectés et utilisés comme indicateur du débit volumique, et **en ce qu'**une paroi de protection (15) avec une ouverture (16) qui est plus grande que l'étranglement est disposée dans la longueur de conduit (1) et à une certaine distance de l'étranglement (4, 5), une chambre de résonance étant ainsi formée dans la longueur de conduit pour amplifier les vibrations.

2. Procédé selon la revendication 1, **caractérisé en ce que** l'étranglement (4, 5) est positionné au niveau de l'extrémité de sortie (3) de la longueur de conduit (1).

3. Procédé selon la revendication 1 ou 2, **caractérisé en ce que** la longueur de conduit (1) en termes de vibrations est maintenue isolée de l'environnement ambiant, en particulier du ou des conduits (respectivement 2, 3) auxquels la longueur de conduit est reliée.

4. Dispositif pour l'indication d'un écoulement de liquide, comprenant une longueur de conduite (1), avec un étranglement (4, 5), qui est échangeable ou a une taille réglable, et à travers lequel s'écoule l'écoulement de liquide, **caractérisé en ce qu'**un capteur, qui est un capteur de vibrations (10), est disposé, afin, lors de la commutation de l'écoulement de liquide, de détecter l'apparition ou l'augmentation et l'arrêt ou la diminution, respectivement, des vibrations qui se produisent lors de la commutation du flux de liquide du flux laminé au flux turbulent, ou inversement, et **en ce qu'**est disposée, dans la longueur de conduit (1) et à distance de l'étranglement (4, 5), une paroi de protection (15) avec une ouverture (16) qui est plus large que l'étranglement, une chambre de résonance étant ainsi formée dans la longueur de conduit pour amplifier les vibrations.

5. Appareil selon la revendication 4, **caractérisé en ce que** la longueur de conduit (1) est en soi conçue comme un étranglement.

6. Appareil selon la revendication 4 ou 5, **caractérisé en ce que** l'étranglement (4, 5) est disposé au niveau de l'extrémité de sortie de la longueur de conduit (1).

7. Appareil selon l'une quelconque des revendications 4 à 6, **caractérisé en ce que** la longueur de conduit (1) est isolée en termes de vibrations de l'environnement ambiant, principalement du ou des conduits (2, 3) auxquels la longueur de conduit est reliée, **en ce que** des éléments amortisseurs de vibrations (7, 8) sont disposés entre la longueur de conduit et le ou les conduits.

8. Appareil selon l'une quelconque des revendications 4 à 7, **caractérisé en ce que** le capteur (10) comprend un élément piézo-électrique.
